# EUROPÄISCHE PATENTSCHRIFT

(11) **EP 0 776 290 B1**
(45) Veröffentlichungstag und Bekanntmachung des Hinweises auf die Patenterteilung: **05.09.2001**
(21) Anmeldenummer: 96909062.0
(22) Anmeldetag: 17.04.1996
(51) Int. Cl.: B60T 8/00

(54) **ANTIBLOCKIERREGELSYSTEM**
ANTI-LOCK CONTROL SYSTEM
SYSTEME DE REGULATION ABS

(30) Priorität: 19.06.1995 DE 19522135
(43) Veröffentlichungstag der Anmeldung: 04.06.1997
(73) Patentinhaber: ROBERT BOSCH GMBH, 70442 Stuttgart (DE)
(72) Erfinder: SAGER, Frank, Farmington Hills, MI 48331 (US)
(86) Internationale Anmeldenummer: DE9600675
(87) Internationale Veröffentlichungsnummer: WO9700186

(56) Entgegenhaltungen:
- EP-A- 0 488 405
- WO-A-82/02862
- DE-A- 3 644 263
- DE-A- 4 433 729

## Beschreibung

### Stand der Technik

Bei Fahrzeugen, die mit einem Antiblockierregelsystem ausgerüstet sind, werden üblicherweise vier, in Einzelfällen auch nur drei Drehzahlfühler eingesetzt, die den einzelnen Rädern zugeordnet sind. Die Ausgangssignale dieser Drehzahlfühler sind im allgemeinen impulsförmig. Aus dem zeitlichen Abstand der einzelnen Impulse bzw. einzelner Impulsflanken wird die Drehzahl des betreffenden Rades ermittelt.

Aus den Raddrehzahlen wird die Fahrzeugreferenzgeschwindigkeit ermittelt, die für die Antiblockierregelung eine wesentliche Größe darstellt. Dabei wird die Fahrzeugreferenzgeschwindigkeit beispielsweise aus den vier Radgeschwindigkeiten oder aus der Radgeschwindigkeit eines Rades, des sogenannten Bezugsrades ermittelt. Weiterhin kann aus den Raddrehzahlen eine Referenzgeschwindigkeit gebildet werden, die bei der ABS-Regelung als weitere Regelgröße verwendbar ist.

Da wesentliche Größen des Antiblockierregelsystemes ausgehend aus Ausgangssignalen der Raddrehzahlfühler gebildet werden, ist es erforderlich, daß eine zuverlässige Überwachung der Funktionsfähigkeit der Sensoren durchgeführt wird.

Es wird deshalb beispielsweise in der deutschen Patentanmeldung P 44 05 801.2 ein Überwachungssystem vorgeschlagen, das bei ABS-Regelsystemen eingesetzt wird und verschiedene Fehlfunktionen der Raddrehzahlsensoren erkennen läßt.

Als besonders problematisch haben sich bei Antiblockierregelsystemen Störsignale erwiesen, die etwa der Netzfrequenz von 50 Hz (oder 60 Hz) entsprechen. Solche Störsignale können beispielsweise durch magnetische Felder, die durch Fahrbahnheizungen hervorgerufen werden, die mit der üblichen Netzspannung betrieben werden, in die Drehzahlfühler des ABS-Systems einkoppeln. Sie spiegeln dem Steuergerät dann unrichtige Radgeschwindigkeiten vor, wodurch eine ungewollte ABS-Regelung ausgelöst und aufrechterhalten werden kann. Ausgehend von dieser Problemstellung ist die Aufgabe der Erfindung, bei Vorhandensein von Störsignalen diese zu erkennen und in ihrer Auswirkung zuverlässig zu unterdrücken. Dabei soll die Störsignalunterdrückung möglichst ohne zusätzliche Bauelemente durchgeführt werden.

Aus der EP-A-0 488 405 ist ein Antiblockierregelsystem mit wenigstens zwei Drehzahlfühlern an den Rädern eines Kraftfahrzeuges bekannt, bei dem die Ausgangssignale der Drehzahlfühler in einer Auswerteeinrichtung zur Bildung von Steuersignalen herangezogen werden. Dabei wird aus einem Raddrehzahlsignal die Fahrzeugreferenzgeschwindigkeit ermittelt. Sofern die Fahrzeugreferenzgeschwindigkeit in einem bestimmten Geschwindigkeitsbereich liegt, wird ein spezielles ABS-Regelverfahren durchgeführt, das sich vom üblichen Regelverfahren unterscheidet.

### Vorteile der Erfindung

Das erfindungsgemäße Antiblockierregelsystem mit den Merkmalen des Anspruchs 1 hat den Vorteil, daß Störsignale, die mit einer der üblichen Netzfrequenz entsprechenden Frequenz auftreten, bei der Auswertung der Drehzahlsensorsignale sowie der aus diesen Signalen gebildeten Fahrzeugreferenzgeschwindigkeit zuverlässig ausgeschlossen werden. Damit können in vorteilhafter Weise die Regeleigenschaften des ABS auch im kritischen Geschwindigkeitsbereich aufrechterhalten werden. Eine Störung mit Netzfrequenz löst keine Regelung mehr aus und eine bestehende Regelung wird bei Fahrzeugstillstand beendet.

Erzielt werden diese Vorteile, indem die Antiblockierregelung in einem kritischen Geschwindigkeitsbereich, in dem die Frequenz der Raddrehzahlsensorsignale des Bezugsrades im Bereich von 50 Hz liegt, eine besondere Angleichung der aktuellen Fahrzeugreferenzgeschwindigkeit sowie der sogenannten Hilfsreferenzgeschwindigkeit erfolgt. Dabei wird die Fahrzeugreferenzgeschwindigkeit in einem Bereich zwischen 63 und 47 Hz negativ angeglichen. Liegt die Radgeschwindigkeit zwischen einem Minimalwert vmin und 47 Hz, kann das Signal nicht von einer Störung verursacht sein und die Fahrzeugreferenzgeschwindigkeit kann dann sicher ausgehend von der Radgeschwindigkeit gebildet werden.

Weitere vorteilhafte Ausgestaltungen der Erfindung werden durch die in den Unteransprüchen angegebenen Maßnahmen erzielt.

### Zeichnung

Ein Ausführungsbeispiel der Erfindung ist in der Zeichnung dargestellt und wird in der nachfolgenden Beschreibung näher erläutert. Es zeigt dabei im einzelnen Figur 1 ein Blockschaltbild mit den für das Verständnis der Erfindung wesentlichen Größen eines Antiblockierregelsystems. In Figur 2 ist ein Flußdiagramm, das schematisch die Vorgehensweise der Regelung erkennen läßt, dargestellt und in Figur 3 sind Geschwindigkeitsverläufe im kritischen Bereich über der Zeit dargestellt, wobei in Figur 3a ein erstes Beispiel angegeben wird und in Figur 3b die Geschwindigkeitsverläufe für eine Regelung auf niedrigem Reibwert dargestellt sind und Figur 3c den Fall darstellt, daß das ABS bereits regelt und das Fahrzeug auf der Heizung zum Stehen kommt.

### Beschreibung des Ausführungsbeispieles

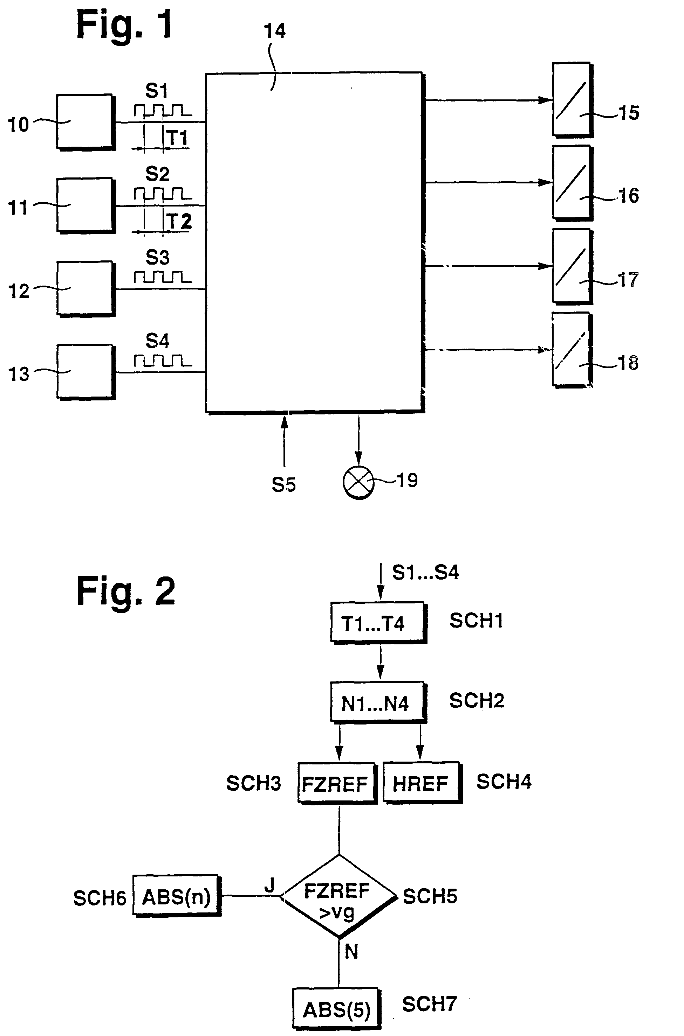

In Figur 1 sind die den einzelnen Rädern zugeordneten Drehzahlsensoren mit 10, 11, 12 und 13 bezeichnet. Sie liefern die Ausgangssignale S1, S2, S3, S4. Üblicherweise setzen sich diese Signale aus einer zeitlichen Abfolge von Impulsen zusammen. Aus den Abständen zwischen den Impulsen bzw. zwischen gleichartigen Impulsflanken werden in der Auswerteanordnung 14, üblicherweise einem Mikroprozessor die für die ABS-Regelung erforderlichen Geschwindigkeiten der einzelnen Räder bzw. die Raddrehzahlen ermittelt. Die auszuwertenden Zeitabstände sind für die einzelnen Signale S1 bis S4 mit T1 bis T4 bezeichnet.

Die Auswerteanordnung 14 entspricht den üblichen Auswerteschaltungen bzw. Steuergeräten bei Antiblockierregelsystemen. Sie umfaßt daher eine zentrale Recheneinheit, Speicher, Vergleichsmittel und ggf. weitere logische Elemente. Die prinzipielle Funktionsweise einer ABS-Regelung ist z. B. in "Bosch: Kraftfahrtechnisches Taschenbuch, 19. Auflage, S. 518 - 523" beschrieben.

Die Auswerteeinrichtung 14 bildet ausgehend aus den Signalen S1 bis S4 Steuerimpulse aus, über die die ABS-Regelung durchgeführt wird. So werden von der Auswerteeinrichtung beispielsweise die den Radbremsen zugeordneten Drei/Drei-Ventile 15 bis 18 angesteuert. Zusätzlich ablaufende Plausibilitätsbetrachtungen bzw. Fehlererkennungen werden mit Hilfe einer Anzeige 19 angezeigt. Weitere, der Auswerteanordnung zugeführte Informationen, die gegebenenfalls von entsprechenden Sensoren geliefert werden, sind mit S5 bezeichnet.

Aus den Zeitabständen T1 bis T4 der einzelnen Signale S1 bis S4 wird die Fahrzeugreferenzgeschwindigkeit sowie eine Hilfsreferenzgeschwindigkeit ermittelt. Aus Figur 2 läßt sich die Vorgehensweise entnehmen.

Wie in Figur 2 dargestellt, werden in der Auswerteeinrichtung jeweils Zeitabstände zwischen aufeinanderfolgenden Flanken der einzelnen Signale gemessen. Es wird dabei in jedem Programmzyklus für jedes Signal S1 bis S4 ein Zeitabstand T1 bis T4 ermittelt (Schritt SCH1). Ausgehend aus diesen Zeiten werden in üblicher Weise die zugehörigen Radgeschwindigkeiten v1 bis v4 bestimmt (Schritt SCH2).

Aus der Geschwindigkeit des z. B. zweitschnellsten Rades, das in diesem Fall das Bezugsrad ist, wird im Schritt SCH3 die Fahrzeugreferenzgeschwindigkeit FZREF ermittelt, wobei in üblicher Weise der bekannte Radumfang sowie die Zähnezahl des Geberrades mitberücksichtigt werden. Eine genauere Beschreibung der Vorgehensweise ist beispielsweise in der DE-P 44 05 801.2 beschrieben.

Neben der Fahrzeugreferenzgeschwindigkeit FZREF wird noch eine weitere Referenzgeschwindigkeit, nämlich die Hilfsreferenzgeschwindigkeit HREF aus der Geschwindigkeit des schnellsten Rades gebildet. In Figur 2 ist dies als Schritt SCH4 dargestellt. Für die Gewinnung der Hilfsreferenz HREF gelten im übrigen dieselben Zusammenhänge wie für die Ermittlung der Fahrzeugreferenzgeschwindigkeit. Grundsätzlich können die Fahrzeugreferenzgeschwindigkeit und die Hilfsreferenzgeschwindigkeit auch nach anderen Kriterien gebildet werden, wobei jedoch eine Referenzgeschwindigkeit aus der Radgeschwindigkeit eines Rades und die andere Referenzgeschwindigkeit aus der eines anderen Rades gebildet wird.

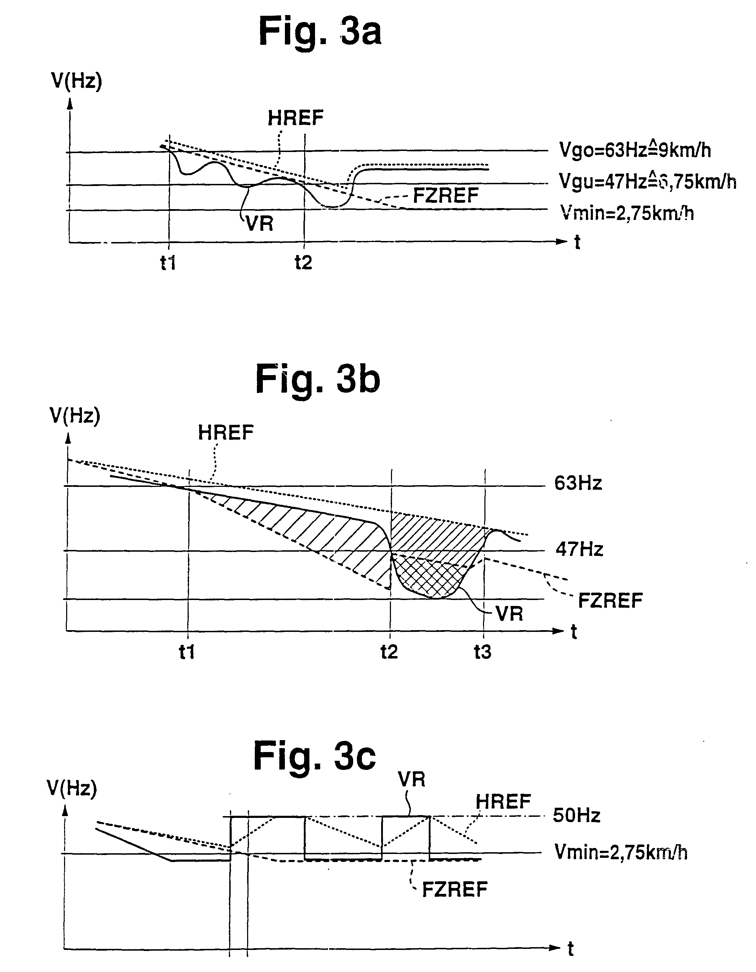

Im Schritt SCH5 wird die Fahrzeugreferenzgeschwindigkeit mit einem Grenzwert verglichen. Dieser Grenzwert vg entspricht einer Signalfrequenz von 63 Hz. bzw. einer Geschwindigkeit von 9 km/h. Ist die Fahrzeugreferenzgeschwindigkeit größer als dieser Grenzwert, wird die normale ABS-Regelung (ABS(n), Schritt SCH6) durchgeführt. Ist die Fahrzeugreferenzgeschwindigkeit FZREF dagegen kleiner als dieser erste Grenzwert vg, läuft ein spezielles ABS-Regelverfahren, das als Schritt SCH7 bezeichnet ist, ab, das im folgenden in Verbindung mit den Darstellungen in Figur 3 erläutert wird und sicherstellen soll, daß möglicherweise auftretende Störungen ohne Folgen bleiben.

In Figur 3 sind Geschwindigkeiten über der Zeit t für verschiedene Bedingungen dargestellt, wobei die Fahrzeugreferenzgeschwindigkeit FZREF als gestrichelte Linie und die Hilfsreferenzgeschwindigkeit HREF als gepunktete Linie dargestellt sind. Mit vR ist die Geschwindigkeit des Bezugsrades bezeichnet. Die als horizontale Linien eingezeichneten Frequenzen von 63 Hz, 47 Hz sowie 16 Hz entsprechen Geschwindigkeiten von 9 km/h, 6,75 km/h sowie 2,75 km/h, wobei letztere Geschwindigkeit auch als vmin bezeichnet wird.

In Figur 3a ist ein Fall angegeben, bei dem die Radgeschwindigkeit vR im kritischen Bereich zwischen 63 Hz und 47 Hz liegt. Die Fahrzeugreferenzgeschwindigkeit FZREF wird daher in diesem Bereich negativ angeglichen. Es wird also jede neu ermittelte Fahrzeugreferenzgeschwindigkeit dann als Fahrzeugreferenzgeschwindigkeit verwendet, wenn sie kleiner ist als die vorhergehende, andernfalls wird die Fahrzeugreferenzgeschwindigkeit zwangsweise verkleinert.

Unterschreitet die Radgeschwindigkeit des Bezugsrades den unteren Grenzwert vgu von 47 Hz kann ein Angleich der Fahrzeugreferenzgeschwindigkeit wieder ausgehend von der Radgeschwindigkeit des Bezugsrades erfolgen. Treten jedoch 50 Hz-Störungen auf, wird eine Geschwindigkeit des Bezugsrades von 50 Hz vorgetäuscht, diese liegt wieder im kritischen Bereich, so daß die Fahrzeugreferenzgeschwindigkeit weiter negativ angeglichen wird, bis sie einen Wert von vmin = 2,75 km/h erreicht.

In Figur 3b ist ein Beispiel für eine Regelung auf niedrigem Reibwert dargestellt. Bei diesem Beispiel unterschreitet die Radgeschwindigkeit vR zum Zeitpunkt t1 die obere Grenzgeschwindigkeit vgo von 63 Hz. Ist das zugehörige Rad das Bezugsrad, so liegt es im Bereich einer Störung mit Netzfrequenz. Es wird daher die Fahrzeugreferenzgeschwindigkeit FZREF sicherheitshalber negativ angeglichen, bis die Radgeschwindigkeit zum Zeitpunkt t2 einen Wert von 47 Hz unterschreitet. Wenn das Bezugsrad diesen Wert unterschreitet, wenn seine Geschwindigkeit also zwischen der Minimalgeschwindigkeit vmin und 47 Hz liegt, ist sichergestellt, daß das zugehörige Signal nicht von einer Störung verursacht wird. Es kann dann die Fahrzeugreferenzgeschwindigkeit auf die Radgeschwindigkeit gesetzt werden und die normale ABS-Regelung wieder aufgenommen werden.

Gelangt die Radgeschwindigkeit des Bezugsrades zum Zeitpunkt t3 wieder in den kritischen Bereich, wird die Fahrzeugreferenzgeschwindigkeit wiederum negativ angeglichen. Im Bereich zwischen t2 und t3 erfolgt der Angleich der Fahrzeugreferenzgeschwindigkeit in Abhängigkeit von der Geschwindigkeit des Bezugsrades.

Bei dem in Figur 3b dargestellten Beispiel ist die Fahrzeugreferenzgeschwindigkeit im Bereich zwischen t1 und t2 kleiner als die Radgeschwindigkeit vR. Es ist daher der Schlupf zwischen der Radgeschwindigkeit und der Fahrzeugreferenzgeschwindigkeit positiv und es findet keine ABS-Regelung statt. Zwischen t2 und t3 ist ein Schlupf zwischen der Fahrzeugreferenzgeschwindigkeit und der Radgeschwindigkeit vorhanden, und es ist ein Schlupf zur Hilfsreferenzgeschwindigkeit vorhanden, es findet eine normale ABS-Regelung statt.

Die Figur 3b zugrundeliegende ABS-Regelung funktioniert nur dann, wenn einige Räder, zweckmäßigerweise die nicht angetriebenen Räder nach der Hilfsreferenz regeln und damit noch Regelzyklen ausführen. Würden alle Räder bezüglich der Fahrzeugreferenzgeschwindigkeit geregelt, würde der sehr geringe und unter Umständen sogar positive Schlupf nicht mehr ausreichen, um einen Druckabbau und damit den Wiederanlauf des Rades auszulösen.

In Figur 3c ist ein Beispiel angegeben, bei dem das ABS bereits in Regelung ist und das Fahrzeug auf einer Störquelle, also beispielsweise einer Heizung zum Stehen kommt. Bei diesem Beispiels soll das Fahrzeug zum Zeitpunkt t1 stehen. Die Radgeschwindigkeit ist also gleich 0. Die Fahrzeugreferenzgeschwindigkeit sowie die Hilfsreferenz werden verringert. Zum Zeitpunkt t2 tritt eine Störung auf, die eine Radgeschwindigkeit von 50 Hz vortäuscht. Ab diesem Zeitpunkt folgt die Fahrzeugreferenzgeschwindigkeit jedoch der Radgeschwindigkeit nicht, da diese zwischen 47 und 63 Hz liegt. Die Fahrzeugreferenzgeschwindigkeit wird daher weiter verringert, bis sie zum Zeitpunkt t3 den Wert 3 km/h erreicht.

Im Bereich zwischen t2 und t3 kann an den nach der Hilfsreferenz geregelten Rädern ein Druckabbau ausgelöst werden, der wesentliche Unterschied zur Regelung bei Niedrigreibwert besteht darin, daß das Rad auf den Abbau nicht reagiert, da das Fahrzeug ja bereits steht. Damit kann sich die Fahrzeugreferenzgeschwindigkeit nicht nach oben angleichen und unterschreitet irgendwann die Grenze von 3 km/h. Ab diesem Zeitpunkt t3 regeln wieder alle Räder nach der Fahrzeugreferenzgeschwindigkeit. Damit wird aber nahezu kein Schlupf mehr berechnet, so daß die ABS-Regelung beendet wird. Solange das Fahrzeug steht, kann die Fahrzeugreferenzgeschwindigkeit auch nicht mehr positiv angleichen, auch nicht wenn ein Rad infolge einer Störung wieder auf eine Geschwindigkeit von 50 Hz springt. Es bleibt dann die Fahrzeugreferenzgeschwindigkeit konstant, während die Hilfsreferenzgeschwindigkeit den Störungen folgt.

Solange die Fahrzeugreferenzgeschwindigkeit größer als 3 km/h ist und die Hilfsreferenzgeschwindigkeit HREF kleiner als 15 km/h, wird die nicht angetriebene Fahrzeugachse nach der Hilfsreferenz geregelt. Ist die ABS-Regelung aktiv, wird unterhalb einer Geschwindigkeit, die 47 Hz entspricht, die Fahrzeugreferenzgeschwindigkeit ausgehend vom Bezugsrad gebildet.

Liegt die Fahrzeugreferenzgeschwindigkeit in einem Bereich zwischen einem oberen Grenzwert vmino und einem unteren Grenzwert vminu, die beispielsweise 8 km/h und 5 km/h betragen, wird auf eine weitere ABS-Regelung umgeschaltet, die sogenannte vmin-Regelung. Bei dieser Regelung wird mit weniger Schlupf geregelt als bei der normalen ABS-Regelung.

Bei der speziellen ABS-Regelung hängt die Vorgehensweise davon ab, welche Bedingungen vorliegen. In einem Bereich, in dem die ABS-Regelung nicht aktiv ist, wird davon ausgegangen, daß die Fahrzeugreferenzgeschwindigkeit FZREF auf der Geschwindigkeit vmin ist und bleibt, da die Bezugsradgeschwindigkeit in diesem Fall 50 Hz entspricht und die Fahrzeugreferenzgeschwindigkeit: FZREF somit negativ angeglichen wird.

In einem Bereich, in dem die ABS-Regelung aktiv ist, bei dem jedoch ein Drehzahlfühler, beispielsweise eins bis vier, gestörte Signale liefern, wird in dem Bereich, in dem die Pulsfolge des Sensorsignales zwischen 63 Hz und einem Wert, der vmin entspricht, eine Angleichung der Fahrzeugreferenzgeschwindigkeit bzw. der Hilfsreferenz durchgeführt, wie sie in Figur 3a dargestellt ist.

In Figur 3a sind Geschwindigkeiten über der Zeit für verschiedene Bedingungen dargestellt, wobei die Fahrzeugreferenzgeschwindigkeit FZREF als gestrichelte Linie und die Hilfsreferenz als gepunktete Linie dargestellt sind. Zusätzlich ist noch die bei aktiver ABS-Regelung auftretende Radgeschwindigkeit vR dargestellt. Die drei horizontalen Linien entsprechen Signalfrequenzen von 63 Hz (9 km/h), 47 Hz (6,75 km/h) sowie 16 Hz bei einer Geschwindigkeit von vmin = 2,75 km/h.

Wie der Figur 3a zu entnehmen ist, läuft die Fahrzeugreferenzgeschwindigkeit nach unten, also zu kleineren Werten bis auf vmin, da das Bezugsrad eine Frequenz von 50 Hz liefert. Unterhalb von 15 km/h werden die Vorderräder nach der Hilfsreferenz HREF geregelt. Die angetriebenen Räder sind unterhalb von 9 km/h überbremst, da sie nach der Fahrzeugreferenzgeschwindigkeit geregelt werden. Wenn die Fahrzeugreferenzgeschwindigkeit 3 km/h unterschreitet, regeln alle Räder wieder nach der Fahrzeugreferenzgeschwindigkeit FZREF, die Regelung fällt damit ab.

Liegt ein Bereich vor, bei dem die ABS-Regelung aktiv ist, wobei weiternhin ein niedriger Reibwert vorhanden ist (low-µ) und treten keine Störungen auf, wird im Bereich zwischen 47 und 63 Hz die Fahrzeugreferenzgeschwindigkeit abnehmen, die nicht angetriebenen Räder werden dann weiterhin nach der Hilfsreferenz geregelt. Wenn ein Rad nach einer Regelphase wieder anläuft und die Geschwindigkeit dabei zwischen vmin und 6,75 km/h (entspricht 47 Hz) liegt und außerdem Bezugsrad der Fahrzeugreferenzgeschwindigkeit ist, so wird die Fahrzeugrefrenzgeschwindigkeit auf dieses Rad gesetzt, es werden also die Geschwindigkeiten dieses Rades zur Bildung der Fahrzeugreferenzgeschwindigkeit verwendet.

In diesem Fall ist die vmin-Regelung aktiv und an den Rädern zugeordneten Druckregelventilen wird Druck abgebaut. Da sich die Fahrzeugreferenzgeschwindigkeit in diesem Fall zyklisch erholt, wird immer nach der Hilfsreferenz geregelt bis das Fahrzeug steht.

Diese spezielle ABS-Regelung in einem Geschwindigkeitsbereich, in dem Störungen mit Netzfrequenz auftreten können, stellt sicher, daß eine solche Störung nicht irrtümlich eine Regelung auslöst. Die bestehende Regelung wird bei Fahrzeugstillstand beendet.

## Patentansprüche

1. Antiblockierregelsystem mit wenigstens zwei Drehzahlfühlern (10, 11, 12, 13, 14) an den Rädern eines Kraftfahrzeuges, bei dem die Drehzahlfühlersignale (S1, S2, S3, S4) in einer Auswerteeinrichtung (14) zur Bildung von Steuersignalen herangezogen werden, wobei aus den Drehzahlfühlersignalen (S1, S2, S3, S4) die zugehörige Radgeschwindigkeit (v1, v2, v3, v4, vR) und aus einer Radgeschwindigkeit (vR) die Fahrzeugreferenzgeschwindigkeit (FZREF) ermittelt wird, und ein Bereich für die Radgeschwindigkeiten (vR) vorgegeben ist und geprüft wird, ob eine Radgeschwindigkeit (vR) in diesem Bereich liegt und ggf. ein spezielles ABS-Regelverfahren durchgeführt wird, **dadurch gekennzeichnet**, daß die Fahrzeugreferenzgeschwindigkeit (FZREF) in einem Radgeschwindigkeitsbereich, in dem Störungen mit Netzfrequenz auftreten können, ausschließlich negativ angeglichen wird, dabei wird jede neu ermittelte Fahrzeugreferenzgeschwindigkeit (FZREF) nur dann als Fahrzeugreferenzgeschwindigkeit (FZREF) verwendet, wenn sie kleiner ist als die vorherige Fahrzeugreferenzgeschwindigkeit (FZREF) und daß eine Hilfsreferenzgeschwindigkeit (HREF) gebildet wird, die bei vorgebbaren Bedingungen zur ABS-Regelung mitberücksichtigt wird.

2. Antiblockierregelsystem nach Anspruch 1, **dadurch gekennzeichnet**, daß die Fahrzeugreferenzgeschwindigkeit (FZREF) und die Hilfsreferenzgeschwindigkeit HREF) ausgehend voneiner Radgeschwindigkeit (v1, v2, v3, v4) eines Rades gebildet werden.

3. Antiblockierregelsystem nach Anspruch 2, **dadurch gekennzeichnet**, daß die Fahrzeugreferenzgeschwindigkeit (FZREF)ausgehend von der Geschwindigkeit des zweitschnellsten Rades und die Hilfsreferenzgeschwindigkeit (HREF) ausgehend von der Radgeschwindigkeit des schnellsten Rades gebildet wird.

4. Antiblockierregelsystem nach einem der vorhergehenden Ansprüche, **dadurch gekennzeichnet**, daß in dem Bereich, in dem Störungen mit Netzfrequenz auftreten können, nicht angetriebene Räder so lange gemäß der Hilfsreferenzgeschwindigkeit (HREF) geregelt werden, bis die Radgeschwindigkeit eine vorgebbare Geschwindigkeitsschwelle unterschreitet.

5. Antiblockierregelsystem nach einem der vorhergehenden Ansprüche, **dadurch gekennzeichnet**, daß bei einer Fahrzeugreferenzgeschwindigkeit (FZREF), die zwischen einem oberen Grenzwert (vmino) und einem unteren Grenzwert (vminu) liegt, auf eine weitere ABS-Regelung umgeschaltet wird.

## Claims

1. Anti-lock control system having at least two speed sensors (10, 11, 12, 13, 14) on the wheels of a motor vehicle, in the case of which the speed sensor signals (S1, S2, S3, S4) are used in an evaluation device (14) to form control signals, the associated wheel speed (v1, v2, v3, v4, vR) being determined from the speed sensor signals (S1, S2, S3, S4), and the vehicle reference speed (FZREF) being determined from a wheel speed (vR), and a range being provided for the wheel speeds (vR) and it being checked whether a wheel speed (vR) is within this range, and a specific ABS control method being carried out if appropriate, **characterized in that** the vehicle reference speed (FZREF) is fitted in an exclusively negative fashion in a wheel speed range in which interference can occur at system frequency, in which case each newly determined vehicle reference speed (FZREF) is used as vehicle reference speed (FZREF) only if it is smaller than the previous vehicle reference speed (FZREF), and in that an auxiliary reference speed (HREF) is formed which can also be taken into account in relation to the ABS control given prescribable conditions.

2. Anti-lock control system according to Claim 1, **characterized in that** the vehicle reference speed (FZREF) and the auxiliary reference speed (HREF) are formed starting from a speed (v1, v2, v3, v4) of a wheel.

3. Anti-lock control system according to Claim 2, **characterized in that** the vehicle reference speed (FZREF) is formed starting from the speed of the second fastest wheel, and the auxiliary reference speed (HREF) is formed starting from the speed of the fastest wheel.

4. Anti-lock control system according to one of the preceding claims, **characterized in that** in the range in which interference can occur at system frequency, non-driven wheels are controlled in accordance with the auxiliary reference speed (HREF) until the wheel speed drops below a prescribable speed threshold.

5. Anti-lock control system according to one of the preceding claims, **characterized in that** a switch is made to a further ABS control in the case of a vehicle reference speed (FZREF) which lies between an upper limiting value (vmino) and a lower limiting value (vminu).

## Revendications

1. Système de régulation antiblocage comportant au moins deux capteurs de vitesse de rotation (10, 11, 12, 13, 14) équipant les roues d'un véhicule automobile, selon lequel les signaux des capteurs de vitesse de rotation (S1, S2, S3, S4) sont appliqués à une installation d'exploitation (14) pour former les signaux de commande, de sorte qu'à partir des signaux des capteurs de vitesse de rotation (S1, S2, S3, S4) on forme la vitesse de roue correspondante (v1, v2, v3, v4, vR) et à partir d'une vitesse de roue (vR) on forme la vitesse de référence du véhicule (FZREF), puis on prédétermine une plage pour les vitesses de rotation (vR) et on vérifie si une vitesse de roue (vR) se situe dans cette plage et, le cas échéant, on exécute une procédure de régulation ABS spéciale,
**caractérisé en ce que**
• la vitesse de référence du véhicule (FZREF) est compensée de manière exclusivement négative dans une plage de vitesses de roue dans laquelle on peut rencontrer des perturbations provenant de la fréquence du réseau,
• et chaque nouvelle vitesse de référence du véhicule ainsi obtenue (FZREF) n'est utilisée comme vitesse de référence du véhicule (FZREF) que si elle est inférieure à la vitesse de référence précédente du véhicule (FZREF), et
• on forme une vitesse de référence auxiliaire (HREF) qui est prise en compte dans des conditions prédéterminées pour la régulation ABS.

2. Système de régulation antiblocage selon la revendication 1,
**caractérisé en ce que**
la vitesse de référence du véhicule (FZREF) et la vitesse de référence auxiliaire (HREF) sont formées à partir d'une vitesse de roue (v1, v2, v3, v4).

3. Système de régulation antiblocage selon la revendication 2,
**caractérisé en ce que**
la vitesse de référence du véhicule (FZREF) est formée à partir de la vitesse de la seconde roue la plus rapide, et la vitesse de référence auxiliaire (HREF) est formée à partir de la vitesse de la roue la plus rapide.

4. Système de régulation antiblocage selon l'une quelconque des revendications précédentes,
**caractérisé en ce que**
dans la plage dans laquelle on peut rencontrer des perturbations causées par la fréquence du réseau, les roues non motrices sont régulées selon la vitesse de référence auxiliaire (HREF) jusqu'à ce que la vitesse de roue passe en dessous d'un seuil de vitesse prédéterminé.

5. Système de régulation antiblocage selon l'une quelconque des revendications précédentes,
**caractérisé en ce que**
pour une vitesse de référence de véhicule (FZREF) comprise entre une valeur limite supérieure (vmino) et une valeur limite inférieure (vminu), on commute sur une autre régulation ABS.
